# EUROPEAN PATENT APPLICATION

(11) **EP 4 301 036 A1**
(43) Date of publication of application: **03.01.2024**
(21) Application number: 21934023.9
(22) Date of filing: 01.04.2021
(51) Int. Cl.: H04W 28/26

(54) **ACTIVATION TIME DETERMINATION METHOD AND APPARATUS, DEVICES AND STORAGE MEDIUM**

(71) Applicant: GUANGDONG OPPO MOBILE TELECOMMUNICATIONS CORP., LTD., Dongguan, Guangdong 523860 (CN)
(72) Inventor: LENG, Bingxue, Dongguan, Guangdong 523860 (CN); LU, Qianxi, Dongguan, Guangdong 523860 (CN)
(74) Representative: Taor, Simon Edward William
(86) International application number: PCT/CN2021/085080
(87) International publication number: WO 2022/205365

(57) **Abstract**

The present application relates to the technical field of communications, and provides an activation time determination method and apparatus, devices and a storage medium. The method comprises: a first device sends first indication information to a second device, the first indication information being used to indicate that the first device is a transmission resource reservation period reserved for periodic transmission; and the second device determines the activation time of a DRX activation state for the periodic transmission on the basis of activation configuration information and the first indication information, the activation configuration information being used to indicate the activation duration of the DRX activation state for the periodic transmission. By means of setting the activation configuration information to indicate the activation duration of the DRX activation state for the periodic transmission in the present application, a receiving UE can determine the activation time of the DRX activation state on the basis of the activation configuration information, and receive the periodic transmission from a sending UE according to the activation time of the DRX activation state so as to ensure that the periodic transmission of a sidelink can implement discontinuous reception and optimize a DRX mechanism.

## Description

### TECHNICAL FIELD

Embodiments of the present disclosure relate to the field of communication technologies, and more particularly, to a method and apparatus for determining an active time, a device, and a storage medium.

### BACKGROUND

Different from reception or transmission of communication data through an access network device in a traditional cellular system, sidelink (SL) transmission refers to a direct transmission of the communication data between terminal devices through a sidelink.

Regarding the SL transmission, 3rd Generation Partnership Project (3GPP) defines two transmission modes: mode A and mode B. In the mode A, a transmission resource of a SL User Equipment (UE) is allocated by the access network device, and the SL UE transmits the communication data on the sidelink according to the transmission resources allocated by the access network device, where the access network device can allocate the transmission resource for a single transmission to the SL UE, or can allocate the transmission resource for semi-persistent transmission to the SL UE. In the mode B, the SL UE selects a transmission resource from a resource pool to transmit the communication data, where the SL UE can select the transmission resource from the resource pool by way of monitoring, or randomly select the transmission resource from the resource pool.

However, how the SL UEs receive the communication data in SL transmission processes needs further discussion and research.

### SUMMARY

Embodiments of the present disclosure provide a method and apparatus for determining an active time, a device, and a storage medium. The technical solutions are as follows.

In a first aspect, embodiments of the present disclosure provide a method for determining an active time, which is applied to a second device, and the method includes:
receiving first indication information from a first device, where the first indication information is used for indicating a transmission resource reservation period reserved by the first device for a periodic transmission; and
determining an active time of a DRX active state for the periodic transmission based on active configuration information and the first indication information, where the active configuration information is used for indicating an active duration of the DRX active state for the periodic transmission, and the second device is configured to receive the periodic transmission in the DRX active state.

In another aspect, embodiments of the present disclosure provide a method for determining an active time, which is applied to a first device, and the method includes:
sending first indication information to a second device, where the first indication information is used for indicating a transmission resource reservation period reserved by the first device for a periodic transmission; and
sending active configuration information to the second device, where the active configuration information is used for indicating an active duration of the DRX active state for the periodic transmission, and the second device is configured to receive the periodic transmission in the DRX active state.

In yet another aspect, embodiments of the present disclosure provide an apparatus for determining an active time, which is provided in a second device, and the apparatus includes:
an indication information receiving module, configured to receive first indication information from a first device, where the first indication information is used for indicating a transmission resource reservation period reserved by the first device for a periodic transmission; and
an active time determination module, configured to determine an active time of a DRX active state for the periodic transmission based on active configuration information and the first indication information, where the active configuration information is used for indicating an active duration of the DRX active state for the periodic transmission, and the second device is configured to receive the periodic transmission in the DRX active state.

In still another aspect, embodiments of the present disclosure provide an apparatus for determining an active time, which is provided in a first device, and the apparatus includes:
an indication information sending module, configured to send first indication information to a second device, where the first indication information is used for indicating a transmission resource reservation period reserved by the first device for a periodic transmission; and
a configuration information sending module, configured to send active configuration information to the second device, where the active configuration information is used for indicating an active duration of the DRX active state for the periodic transmission, and the second device is configured to receive the periodic transmission in the DRX active state.

In still another aspect, embodiments of the present disclosure provide a second device, including: a processor, and a transceiver connected to the processor.

The transceiver is configured to receive first indication information from a first device, where the first indication information is used for indicating a transmission resource reservation period reserved by the first device for a periodic transmission.

The processor is configured to determine an active time of a DRX active state for the periodic transmission based on active configuration information and the first indication information, where the active configuration information is used for indicating an active duration of the DRX active state for the periodic transmission, and the second device is configured to receive the periodic transmission in the DRX active state.

In still another aspect, embodiments of the present disclosure provide a first device, including: a processor, and a transceiver connected to the processor.

The transceiver is configured to send first indication information to a second device, where the first indication information is used for indicating a transmission resource reservation period reserved by the first device for a periodic transmission.

The transceiver is further configured to send active configuration information to the second device, where the active configuration information is used for indicating an active duration of the DRX active state for the periodic transmission, and the second device is configured to receive the periodic transmission in the DRX active state.

In still another aspect, embodiments of the present disclosure provide a computer-readable storage medium having a computer program stored thereon, where the computer program is configured to be executed by a processor of a second device, to implement the method for determining the active time at the second device side as described above.

In still another aspect, embodiments of the present disclosure provide a computer-readable storage medium having a computer program stored thereon, where the computer program is configured to be executed by a processor of a first device, to implement the method for determining the active time at the first device side as described above.

In still another aspect, embodiments of the present disclosure provide a chip, including a programmable logic circuit and/or program instructions, where the chip is configured to implement the method for determining the active time at the second device side as described above when running on the second device.

In still another aspect, embodiments of the present disclosure provide a chip, including a programmable logic circuit and/or program instructions, where the chip is configured to implement the method for determining the active time at the first device side as described above when running on the first device.

In still another aspect, embodiments of the present disclosure provide a computer program product, configured to implement the method for determining the active time at the second device side as described above when running on the second device.

In still another aspect, embodiments of the present disclosure provide a computer program product, configured to implement the method for determining the active time at the first device side as described above when running on the first device.

The technical solutions provided by embodiments of the present disclosure may include the beneficial effects.

By setting the active configuration information to indicate the active duration of the DRX active state for the periodic transmission, a receiver UE can determine the active time of the DRX active state based on the active configuration information, and receive the periodic transmission from a sender UE according to the active time of the DRX active state. Thus, it is ensured that discontinuous reception can be achieved for the periodic transmission on the sidelink, thereby optimizing the DRX mechanism.

### BRIEF DESCRIPTION OF THE DRAWINGS

In order to explain technical solutions in embodiments of the present disclosure more clearly, drawings needed in the description of these embodiments will be briefly introduced below. Obviously, the drawings in the following description are only some embodiments of the present disclosure. For those of ordinary skills in the art, other drawings may be obtained from these drawings without creative efforts.
FIG. 1 is a schematic diagram of a network architecture provided by an embodiment of the present disclosure;
FIG. 2 is a schematic diagram of a transmission mode of a SL transmission provided by an embodiment of the present disclosure;
FIG. 3 is a flowchart of a method for determining an active time provided by an embodiment of the present disclosure;
FIG. 4 is a schematic diagram of a periodic transmission provided by an embodiment of the present disclosure;
FIG. 5 is a block diagram of an apparatus for determining an active time provided by an embodiment of the present disclosure;
FIG. 6 is a block diagram of an apparatus for determining an active time provided by another embodiment of the present disclosure;
FIG. 7 is a block diagram of an apparatus for determining an active time provided by yet another embodiment of the present disclosure;
FIG. 8 is a structural block diagram of a first device provided by an embodiment of the present disclosure; and
FIG. 9 is a structural block diagram of a second device provided by an embodiment of the present disclosure.

### DETAILED DESCRIPTION

In order to make objectives, technical solutions, and advantages of the present disclosure clearer, implementations of the present disclosure will be further described in detail below with reference to the drawings.

Network architectures and service scenarios described in embodiments of the present disclosure are used for illustrating the technical solutions in embodiments of the present disclosure more clearly, and do not constitute limitations on the technical solutions provided by embodiments of the present disclosure. Those of ordinary skills in the art know that, with the evolution of the network architectures and the emergence of new service scenarios, the technical solutions provided in embodiments of the present disclosure are also applicable to similar technical problems.

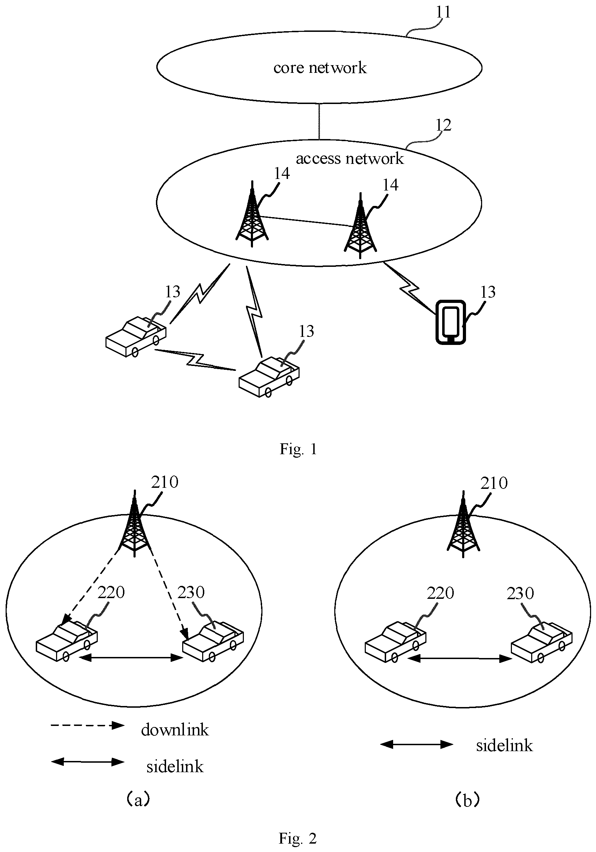

Referring to FIG. 1, it shows a schematic diagram of a network architecture provided by an embodiment of the present disclosure. The network architecture may include a core network 11, an access network 12, and a terminal 13.

The core network 11 includes several core network devices. Functions of the core network device are mainly to provide user connection and user management, and to implement bearing for service, and further functions as a bearer network to provide an interface to an external network. For example, a core network of a 5th Generation (5G) New Radio (NR) system may include an Access and Mobility Management Function (AMF) entity, a User Plane Function (UPF) entity, a Session Management Function (SMF) entity, and other devices.

The access network 12 includes several access network devices 14. The access network in the 5G NR system may be called New Generation-Radio Access Network (NG-RAN). The access network device 14 is a device that is deployed in the access network 12 and is used to provide wireless communication functions for the terminal device 13. The access network device 14 may include various forms of macro base stations, micro base stations, relay stations, access points, etc. In systems employing different wireless access technologies, the devices with functions of the access network device may be named differently. For example, in 5G NR systems, they are called gNodeB or gNB. With the evolution of communication technologies, the name "access network device" may change. For convenience of description, in embodiments of the present disclosure, the apparatuses for providing the wireless communication functions for the terminal device 13 as described above are collectively referred to as access network devices.

There are typically a plurality of terminal devices 13, and one or more terminal devices 13 may be distributed in a cell managed by each access network device 14. The terminal devices 13 may include various handheld devices, vehicle-mounted devices, wearable devices, computing devices, or other processing devices connected to wireless modems, as well as various forms of User Equipment (UE), Mobile Stations (MS), and so on that have the wireless communication functions. For convenience of description, the above-mentioned devices are collectively referred to as terminal devices.

In some implementations, the access network device 14 and the core network device communicate with each other through a certain air technology, such as a NG interface in the 5G NR system. The access network device 14 and the terminal device 13 communicate with each other through a certain air technology, such as a Uu interface.

In embodiments of the present disclosure, the terminal devices 13 (for example, a vehicle-mounted device and another device such as another vehicle-mounted device, a mobile phone, a Road Side Unit (RSU), etc.) may communicate with each other through a direct-connection communication interface (such as a PC5 interface), and accordingly, a communication link established based on the direct-connection communication interface may be referred to as a direct link or sidelink (SL). The SL transmission is a direct communication of communication data between the terminal devices through the sidelink. Different from reception or transmission of the communication data through the access network device in a traditional cellular system, the SL transmission has characteristics of short delay, low overhead, etc., which is suitable for communication between two terminal devices that are geographically close (such as the vehicle-mounted device and other peripheral devices that are geographically close).

Regarding the SL transmission, 3GPP defines two transmission modes: mode A and mode B.

In the mode A, a transmission resource of a SL UE is allocated by the access network device, and the SL UE transmits the communication data on the sidelink according to the transmission resource allocated by the access network device, where the access network device can allocate the transmission resource for a single transmission to the SL UE, or can allocate the transmission resource for semi-persistent transmission to the SL UE. As shown in FIG. 2(a), an access network device 210 allocates transmission resources to a SL UE 220 and a SL UE 230 through a downlink, and the SL UE 220 and SL UE 230 directly transmit the communication data through the sidelink based on the transmission resources allocated by the access network device 210.

In the mode B, the SL UE selects the transmission resource from a resource pool to transmit the communication data, and the SL UE may select the transmission resource from the resource pool by way of monitoring, or randomly select the transmission resource from the resource pool. As shown in FIG. 2(b), the SL UE 220 and the SL UE 230 directly transmit the communication data through the sidelink based on transmission resources in the resource pool.

3GPP has also carried out researches at several stages as follows for the SL transmission.

Proximity based Service (Prose): in Release 12 (Rel-12) or Release 13 (Rel-13), 3GPP conducted researches on the Prose scenario, where the Prose is mainly used for public safety services. In Prose, the UE discontinuously sends or receives data on the SL by configuring a position of a resource pool in the time domain, such as configuring the resource pool to be discontinuous in the time domain, so as to achieve the effect of power saving.

Vehicle to Everything (V2X): in Release 14 (Rel-14) or Release 15 (Rel-15), 3GPP conducted researches on the V2X scenario, where V2X is mainly used for relatively high-speed vehicle-to-vehicle and vehicle-to-human communication services. In V2X, since a vehicle-mounted system has continuous power supply, power efficiency is not a main problem to be solved, but the latency of data transmission is the main problem to be solved. Therefore, in a V2X system design, UE is required to perform continuous transmission and reception.

Further Enhancements to LTE Device to Device (FeD2D): in Rel-14, 3GPP conducted researches on a scenario in FeD2D where wearable devices access a network through mobile phones. FeD2D is mainly used for scenarios with a low mobile speed and low power access. In FeD2D, 3GPP concluded in a pre-research stage that the access network device may configure a Discontinuous Reception (DRX) parameter of a Remote UE through a Relay UE. However, since this topic has not further entered a standardization stage, there is no conclusion on specific details about how to configure the DRX.

For V2X, on the basis of Long Term Evolution (LTE) V2X, NR V2X is not limited to broadcast scenarios, but is further expanded to unicast and groupcast scenarios. 3GPP studies the application of V2X in these scenarios.

Similar to LTE V2X, NR V2X will also define the above-mentioned two transmission modes, *i.e*., mode A and mode B. Furthermore, the user may be in a mixed mode. That is, the mode A may be used to allocate the transmission resource by the access network device, and in the meanwhile, the mode B may also be used to select the transmission resource from the resource pool. An acquisition mode for the transmission resource is indicated by means of SL grant. That is, the SL grant indicates a time-frequency position of a corresponding Physical Sidelink Controlled Channel (PSCCH) and/or Physical Sidelink Shared Channel (PSSCH) resource.

Different from LTE V2X, in addition to a Hybrid Automatic Repeat Request (HARQ) retransmission independently initiated by the UE without any feedback, NR V2X introduces a feedback-based HARQ retransmission, which is not limited to the unicast communication, but also includes the groupcast communication.

In NR V2X, some new features are further introduced, such as supporting a large number of aperiodic services, increasing the number of retransmissions, and more flexible resource reservation periods. All these features have great influences on a mode in which the UE independently selects the resource. Therefore, on the basis of the mode B in LTE V2X, 3GPP re-discussed and designed a resource selection scheme suitable for NR V2X, which is denoted as mode 2. In the mode 2, the UE selects the transmission resource in the resource pool that is not reserved by other UEs or reserved by other UEs but has the low receiving power by decoding Sidelink Control Information (SCI) sent by other UEs and measuring the receiving power of SL. The resource selection scheme for the mode 2 in NR V2X is divided into two main steps. That is, the UE first determines a candidate resource set, and then selects a transmission resource from the candidate resource set for data transmission, as shown below.

In step 1, the UE determines the candidate resource set [38.214]. The UE uses all available transmission resources in a resource selection window as a resource set A. Firstly, the UE needs to determine whether the transmission resource is reserved by other UEs according to a monitoring result in a resource monitoring window. Then, the UE performs resource exclusion according to the unmonitored slot and the monitored first-order SCI. After completing the resource exclusion, UE will, if the number of remaining transmission resources in the resource set A is less than a certain ratio, increase a Reference Signal Receiving Power (RSRP) threshold by 3dB, and repeatedly perform the resource exclusion, until the number of remaining transmission resources in the resource set A is greater than or equal to this ratio. Compared to LTE V2X where the ratio is fixed at 20%, a value of this ratio in NR V2X is more flexible, and the possible values thereof are {20, 35, 50}%. A specific value of the ratio is pre-configured or configured by the network in units of resource pools. Finally, the resource set A subject to the resource exclusion is the candidate resource set for the UE.

In step 2, the UE selects a transmission resource [38.321] in the candidate resource set. The UE randomly selects one or more transmission resources from the resource set A with an equal probability. It should be noted that the following time-domain constraints should be met when the plurality of transmission resources are selected.
(1) after some exceptions are removed, the UE shall enable a certain transmission resource selected for the retransmission to be indicated by the previously sent first-order SCI. The foregoing exceptions include that after the resource exclusion, the UE cannot select a transmission resource from the resource set A that satisfies the time-domain constraints. The foregoing exceptions further include that due to factors such as resource preemption, congestion control, and conflict with uplink services, the UE gives up the transmission, which causes that a transmission resource for a certain retransmission is not indicated by the previously sent first-order SCI.
(2) The UE shall guarantee that among any two selected transmission resources, if the preceding transmission resource requires a HARQ feedback, these two transmission resources shall be separated at least by a duration of Z (Z is a positive number) in the time domain. When the resource selection cannot meet the time-domain constraints, for example, in a case that a Physical Data Block (PDB) is relatively short but the number of retransmissions is relatively large, the selection of some retransmission resources may be given up, or the HARQ feedback may be deactivated for certain few transmissions, depending on the UE implementations.

In some implementations, the SL transmission includes a periodic transmission, and the sender UE indicates a reservation period value of 4 bit in the sent SCI, so as to inform other UEs that the sender UE periodically reserves transmission resources for the transmission of the communication data. However, a DRX mechanism in the related art does not cover a case of a sidelink-based periodic transmission.

The DRX mechanism in the related art mainly involves the following procedure: based on a DRX configuration, the UE discontinuously monitors a Physical Downlink Control Channel (PDCCH) from a network device, so as to save power. When a Radio Network Temporary Identity (C-RNTI), a CI-RNTI, a CS-RNTI, an INT-RNTI, a SFI-RNTI, a SP-CSI-RNTI, a TPC-PUCCH-RNTI, a TPC-PUSCH-RNTI, a TPC-SRS-RNTI, and an AI-RNTI corresponding to the UE are carried in the PDCCH, the UE will perform corresponding DRX operations according to the control information.

The network device controls a DRX behavior of the UE by configuring a series of parameters. In an example, the UE is in a DRX active state in any of the following situations: during the running period of drx-onDurationTimer or drx-InactivityTimer, during the running period of drx-RetransmissionTimerDL or dirx-RetransmissionTimerUL, during the running period of ra-ContentionResolutionTimer or msgB-ResponseWindow, an unprocessed Scheduling Request (SR) being existing, or a new transmission period being indicated in the PDCCH.

Just because the DRX mechanism in the related art does not cover the case of the sidelink-based periodic transmission, embodiments of the present disclosure provide a method for determining an active time to optimize the DRX mechanism in the related art, so that the receiver UE receives the communication data on the reserved transmission resource notified by the sender UE. In the following, the technical solutions provided by the present disclosure will be described through several exemplary embodiments.

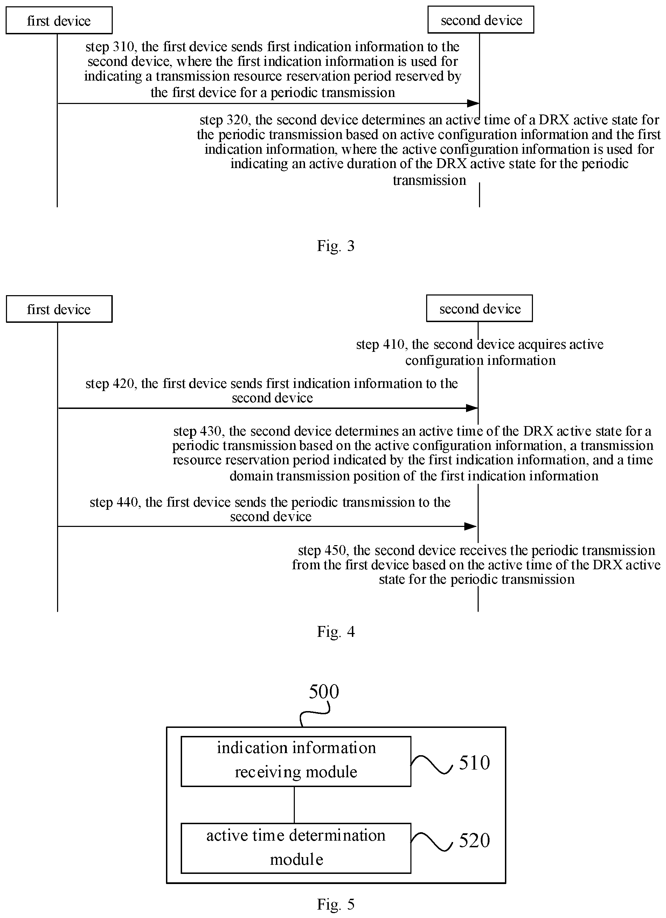

Referring to FIG. 3, which shows a flowchart of a method for determining an active time provided by an embodiment of the present disclosure. The method may be applied to the network architecture shown in FIG. 1, for example, applied to the terminal device 13 that transmits communication data through a sidelink. The method includes at least some of the following steps.

In step 310, a first device sends first indication information to a second device, where the first indication information is used for indicating a transmission resource reservation period reserved by the first device for a periodic transmission.

In embodiments of the present disclosure, the first device is a sender UE, that is, a UE that sends the communication data, and the second device is a receiver UE, that is, a UE that receives the communication data. In addition, a direct communication may be established between the first device and the second device through the sidelink. For example, the direct communication is established through a PC5 interface. In a case that the first device performs the periodic transmission, the first device may send the first indication information to the second device, where the first indication information is used for indicating the transmission resource reservation period reserved by the first device for the periodic transmission.

In an example, the first device carries the first indication information in SCI, and sends it to the second device through a PSCCH. Embodiments of the present disclosure do not limit the number of bits occupied by the first indication information. Optionally, the number of bits occupied by the first indication information is 4 bits. Note that, the number of bits occupied by the first indication information may also be 2 bits, 3 bits, 5 bits, 6bit, etc.. In some implementations, the first device may learn the active time in which the second device is in the DRX active state, so that the first device can send the first indication information to the second device when the second device is in the DRX active state.

In step 320, the second device determines an active time of a DRX active state for the periodic transmission based on active configuration information and the first indication information, where the active configuration information is used for indicating an active duration of the DRX active state for the periodic transmission.

The second device detects and receives the communication data when it is in the DRX active state. Therefore, in order to receive the periodic transmission from the first device, the second device needs to determine the active time of the DRX active state for the periodic transmission accordingly. Further, the second device enters the DRX active state according to the active time of the DRX active state for the periodic transmission, and detects and receives the periodic transmission from the first device. In embodiments of the present disclosure, the second device determines the active time of the DRX active state for the periodic transmission based on the active configuration information and the first indication information.

Since the first indication information indicates the transmission resource reservation period, that is, a time interval between two transmissions, the periodic transmission performed by the first device may be a continuous periodic transmission (where the transmission resource reservation period is zero), or a non-continuous periodic transmissions (where the transmission resource reservation period is not zero). However, in a case that the first device performs the continuous periodic transmission, the second device does not need to enter the DRX active state for the active time of the DRX active state for the periodic transmission. In view of this, in an example, the step 320 includes that in a case where the transmission resource reservation period indicated by the first indication information is not zero, the second device determines the active time of the DRX active state for the periodic transmission based on the active configuration information and the first indication information.

The active configuration information is used for indicating the active duration of the DRX active state for the periodic transmission. Embodiments of the present disclosure do not limit the specific contents of the active configuration information. In an example, the active configuration information includes a running duration of the first timer, and the first timer is configured to control the second device to be in the DRX active state for the periodic transmission. Optionally, the first timer may be a newly defined timer in a communication protocol, for example, a newly defined periodic active timer in the communication protocol. Alternatively, the first timer may be obtained by reusing a timer already defined in the communication protocol. For example, the following several timers already defined in the communication protocol may be reused: drx-onDuirationTimer, dirx-InactivityTimer, drx-RetransmissionTimer, etc.. In another example, the active configuration information includes a first active duration, and the first active duration is used for indicating the second device being in the DRX active state. Optionally, the first active duration is a periodic activation value, which is a fixed time length value.

Embodiments of the present disclosure do not limit the way in which the second device acquires the active configuration information. In an example, the active configuration information is preconfigured in the second device. For example, the active configuration information is predefined by the communication protocol. Or, the active configuration information is preconfigured in a Subscriber Identity Module (SIM) card of the second device. In another example, the active configuration information is from a network device. For example, the network device broadcasts the active configuration information by carrying it in a System Information Block (SIB), and the second device may detect and receive the active configuration information. Alternatively, the network device carries the active configuration information in a dedicated signaling (such as a Radio Resource Control (RRC) signaling) and sends it to the second device. In yet another example, the active configuration information is from the first device. In view of this, the method further includes that the first device sends the active configuration information to the second device. For example, the first device sends the active configuration information to the second device in a unicast or broadcast or groupcast manner, and the second device may detect and receive the active configuration information. Or, the first device carries the active configuration information in the SCI and sends it to the second device through PSCCH or PSSCH.

In an example, the step 320 includes that the second device determines the active time of the DRX active state for the periodic transmission based on the active configuration information, the transmission resource reservation period indicated by the first indication information, and a time domain transmission position of the first indication information. The time domain transmission position of the first indication information may also be referred to as a time domain position of a PSCCH carrying the first indication information and/or a time domain position of a PSSCH transmitted simultaneously with the first indication information. Optionally, the active time of the DRX active state for the periodic transmission includes a plurality of active time periods. The determination, by the second device, of the active time of the DRX active state for the periodic transmission based on the active configuration information, the transmission resource reservation period indicated by the first indication information, and the time domain transmission position of the first indication information includes that the second device determines a time domain position of a reserved transmission resource reserved by the first device for the periodic transmission based on the transmission resource reservation period and the time domain transmission position, and determines the active time period based on the active configuration information and the time domain position of the reserved transmission resource. An active duration of the active time period is equal to an active duration indicated by the active configuration information.

In practical applications, the first device may reselect the transmission resource when performing the periodic transmission, and perform the periodic transmission on the reselected transmission resource. In embodiments of the present disclosure, considering the resource reselection process of the first device, the active time period needs to cover the time domain position of the reserved transmission resource reserved by the first device for the periodic transmission. That is, the coverage of the active time period should at least include the time domain position of the reserved transmission resource. This is aimed to ensure that the second device can detect and receive the periodic transmission from the first device. In view of this, optionally, a starting time of the active time period is earlier than or equal to a starting time of the time domain position of the reserved transmission resource, and an ending time of the active time period is equal to or later than an ending time of the time domain position of the reserved transmission resource.

For example, in a case that the starting time of the active time period is equal to the starting time of the time domain position of the reserved transmission resource, and the ending time of the active time period is equal to the ending time of the time domain position of the reserved transmission resource, the active time period only includes the time domain position of the reserved transmission resource. Alternatively, in a case that the starting time of the active time period is earlier than the starting time of the time domain position of the reserved transmission resource, and the ending time of the active time period is later than the ending time of the time domain position of the reserved transmission resource, or in a case that the starting time of the active time period is earlier than the starting time of the time domain position of the reserved transmission resource, and the ending time of the active time period is equal to the ending time of the time domain position of the reserved transmission resource, or in a case that the starting time of the active time period is equal to the starting time of the time domain position of the reserved transmission resource, and the ending time of the active time period is later than the ending time of the time domain position of the reserved transmission resource, the active time period not only covers the reserved transmission resource, but also covers other transmission resources.

After determining the active time of the DRX active state for the periodic transmission, the second device may receive the periodic transmission according to the active time of the DRX active state. In view of this, in an example, the above method further includes that the first device sends the periodic transmission to the second device, and the second device receives the periodic transmission from the first device within the active time of the DRX active state for the periodic transmission. The second device is in the DRX active state during the active time of the DRX active state. From the above introduction, it is seen that the first device may reselect the transmission resource when performing the periodic transmission. Thus, it is ensured that the second device can detect and receive the periodic transmission from the first device. Optionally, in a case that the first device reselects the resource for the periodic transmission, a time domain position of the reselected transmission resource is located within the active time of the DRX active state for the periodic transmission.

It should be noted that "the active time of the DRX active state for the periodic transmission" described in embodiments of the present disclosure may also be known as "a periodic active time of the DRX active state", or may have other names. For ease of description, "the active time of the DRX active state for the periodic transmission" is collectively referred to in embodiments of the present disclosure. It should be understood that different titles, different expressions, etc. having the same meaning as "the active time of the DRX active state for the periodic transmission" shall fall within the protection scope of the present disclosure. It should be noted that "the periodic transmission" mentioned in "the active time of the DRX active state for the periodic transmission" refers to "an announced periodic transmission". That is, a device that needs to perform the periodic transmission has already notifies other UEs of a transmission resource reservation period reserved by the device for the periodic transmission.

In summary, in the technical solutions provided by embodiments of the present disclosure, by setting the active configuration information to indicate the active duration of the DRX active state for the periodic transmission, a receiver UE can determine the active time of the DRX active state based on the active configuration information, and receive the periodic transmission from a sender UE according to the active time of the DRX active state. Thus, it is ensured that discontinuous reception may be achieved by the periodic transmission of the sidelink, thereby optimizing the DRX mechanism. Moreover, in embodiments of the present disclosure, the active configuration information may include both the timing duration of the timer and the active duration, so that contents of the active configuration information may be flexibly set. In addition, in embodiments of the present disclosure, the active time of the DRX active state determined by the receiver UE at least covers the time domain position of the transmission resource reserved by the sender UE for the periodic transmission. This helps to reserve sufficient time for the sender UE to perform the resource reselection, and ensures that the receiver UE can receive the periodic transmission, thereby improving the effectiveness of the periodic transmission.

Referring to FIG. 4, which shows a schematic diagram of a periodic transmission provided by an embodiment of the present disclosure, the periodic transmission includes at least some of the following steps. For contents not described in detail in embodiments corresponding to FIG. 4, reference may be made to embodiments corresponding to FIG. 3 as described above, and details are not repeated here.

In step 410, a second device acquires active configuration information. The active configuration information is used for indicating an active duration of a DRX mechanism for an announced periodic transmission. Optionally, the active configuration information includes an active duration of a first timer, or includes a first active duration. The active configuration information may be preconfigured in the second device, or sent by a network device to the second device, or sent by a first device to the second device.

In step 420, the first device sends first indication information to the second device. The first indication information is used for indicating a transmission resource reservation period reserved by the first device for the announced periodic transmission. The first device may carry the first indication information in SCI and send it to the second device through a PSCCH or PSSCH. Optionally, the first device sends the first indication information to the second device when the second device is in the DRX active state.

In step 430, the second device determines an active time of the DRX active state for the periodic transmission based on the active configuration information, the transmission resource reservation period indicated by the first indication information, and a time domain transmission position of the first indication information. The active time of the DRX active state at least covers the time domain position of the transmission resource reserved by the first device for the announced periodic transmission. Optionally, the second device executes the step 430 when the transmission resource reservation period indicated by the first indication information is not zero.

In step 440, the first device sends the periodic transmission to the second device. Optionally, if the first device performs resource reselection when sending the announced periodic transmission, the reselected transmission resource needs to be located within the active time of the DRX active state for the announced periodic transmission. Optionally, the step 440 may be performed before the step 430, may be performed after the step 430, or may be performed simultaneously with the step 430, which is not limited in embodiments of the present disclosure.

In step 450, the second device receives the periodic transmission from the first device based on the active time of the DRX active state for the periodic transmission. The second device is in the DRX active state during the active time of the DRX active state for periodic transmission.

It should be noted that the above-mentioned embodiments introduce the method for determining the active time provided by embodiments of the present disclosure from the perspective of interactions between the first device and the second device. In the above-mentioned embodiments, steps performed by the first device may be separately implemented as the method for determining the active time at the first device side, and steps performed by the second device may be separately implemented as the method for determining the active time at the second device side.

The following are apparatus embodiments of the present disclosure, which may be configured to implement method embodiments of the present disclosure. For details not disclosed in the apparatus embodiments of the present disclosure, reference may be made to the method embodiments of the present disclosure.

Referring to FIG. 5, which shows a block diagram of an apparatus for determining an active time provided by an embodiment of the present disclosure, the apparatus has functions for implementing the above method examples, which may be implemented by hardware, or may be implemented by executing corresponding software by hardware. The apparatus may be the second device described above, or may be provided in the second device. As shown in FIG. 5, the apparatus 500 may include: an indication information receiving module 510 and an active time determination module 520.

The indication information receiving module 510 is configured to receive first indication information from a first device, where the first indication information is used for indicating a transmission resource reservation period reserved by the first device for a periodic transmission.

The active time determination module 520 is configured to determine an active time of a DRX active state for the periodic transmission based on active configuration information and the first indication information, where the active configuration information is used for indicating an active duration of the DRX active state for the periodic transmission, and the periodic transmission is received by the second device when the second device is in the DRX active state.

In an example, the active configuration information includes a running duration of a first timer, and the first timer is configured to control the second device to be in the DRX active state.

In an example, the active configuration information includes a first active duration, and the first active duration is used for indicating the second device being in the DRX active state.

In an example, the active configuration information is preconfigured in the second device; or the active configuration information is from a network device; or the active configuration information is from the first device.

In an example, the active time determination module 520 is configured to: determine the active time of the DRX active state for the periodic transmission, based on the active configuration information, the transmission resource reservation period indicated by the first indication information, and a time domain transmission position of the first indication information.

In an example, the active time of the DRX active state for the periodic transmission includes a plurality of active time periods, and the active time determination module 520 is configured to: determine a time domain position of a reserved transmission resource reserved by the first device for the periodic transmission based on the transmission resource reservation period and the time domain transmission position; and determine an active time period based on the active configuration information and the time domain position of the reserved transmission resource, where an active duration of the active time period is equal to the active duration indicated by the active configuration information.

In an example, a starting time of the active time period is earlier than or equal to a starting time of the time domain position of the reserved transmission resource; and an ending time of the active time period is equal to or later than an ending time of the time domain position of the reserved transmission resource.

In an example, the active time determination module 520 is configured to: in a case that the transmission resource reservation period indicated by the first indication information is not zero, determine the active time of the DRX active state for the periodic transmission based on the active configuration information and the first indication information.

In an example, in a case that resource reselection is performed by the first device for the periodic transmission, a time domain position of a reselected transmission resource is located within the active time of the DRX active state for the periodic transmission.

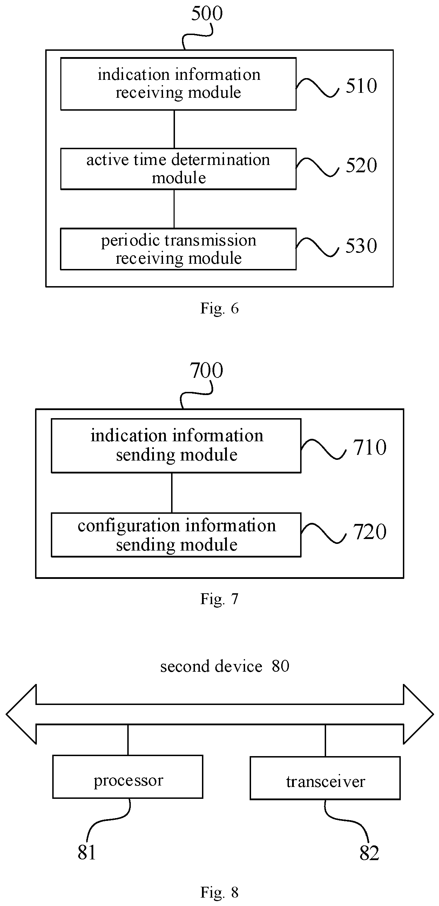

In an example, as shown in FIG. 6, the apparatus 500 further includes: a periodic transmission receiving module 530, configured to receive the periodic transmission within the active time of the DRX active state for the periodic transmission, where the second device is in the DRX active state during the active time of the DRX active state.

In summary, in the technical solutions provided by embodiments of the present disclosure, by setting the active configuration information to indicate the active duration of the DRX active state for the periodic transmission, a receiver UE can determine the active time of the DRX active state based on the active configuration information, and receive the periodic transmission from a sender UE according to the active time of the DRX active state. Thus, it is ensured that discontinuous reception can be achieved by the periodic transmission of the sidelink, thereby optimizing the DRX mechanism. Moreover, in embodiments of the present disclosure, the active configuration information may include both the timing duration of the timer and the active duration, so that the contents of the active configuration information may be flexibly set. In addition, in embodiments of the present disclosure, the active time of the DRX active state determined by the receiver UE at least covers the time domain position of the transmission resource reserved by the sender UE for the periodic transmission. This helps to reserve sufficient time for the sender UE to perform the resource reselection, and ensures that the receiver UE can receive the periodic transmission, thereby improving the effectiveness of the periodic transmission.

Referring to FIG. 7, which shows a block diagram of an apparatus for determining an active time provided by an embodiment of the present disclosure, the apparatus has functions for implementing the above method examples, which may be implemented by hardware, or may be implemented by executing corresponding software by hardware. The apparatus may be the first device described above, or may be provided in the first device. As shown in FIG.7, the apparatus 700 may include: an indication information sending module 710 and a configuration information sending module 720.

The indication information sending module 710 is configured to send first indication information to a second device, where the first indication information is used for indicating a transmission resource reservation period reserved by the first device for a periodic transmission.

The configuration information sending module 720 is configured to send active configuration information to the second device, where the active configuration information is used for indicating an active duration of a DRX active state for the periodic transmission, and the periodic transmission is received by the second device when the second device is in the DRX active state.

In an example, the active configuration information includes a running duration of a first timer, and the first timer is configured to control the second device to be in the DRX active state.

In an example, the active configuration information includes a first active duration, and the first active duration is used for indicating the second device being in the DRX active state.

In an example, in a case that resource reselection is performed by the first device for the periodic transmission, a time domain position of a reselected transmission resource is located within the active time of the DRX active state for the periodic transmission.

In summary, in the technical solutions provided by embodiments of the present disclosure, by setting the active configuration information to indicate the active duration of the DRX active state for the periodic transmission, a receiver UE can determine the active time of the DRX active state based on the active configuration information, and receive the periodic transmission from a sender UE according to the active time of the DRX active state. Thus, it is ensured that discontinuous reception can be achieved for the periodic transmission of the sidelink, thereby optimizing the DRX mechanism. Moreover, in embodiments of the present disclosure, the active configuration information may include both the timing duration of the timer and the active duration, so that the contents of the active configuration information may be flexibly set. In addition, in embodiments of the present disclosure, the active time of the DRX active state determined by the receiver UE at least covers the time domain position of the transmission resource reserved by the sender UE for the periodic transmission. This helps to reserve sufficient time for the sender UE to perform the resource reselection, and ensures that the receiver UE can receive the periodic transmission, thereby improving the effectiveness of the periodic transmission.

It should be noted that, the functions implemented by the apparatus provided in the above embodiments are only illustrated by using the division of the above functional modules as an example. In practical applications, the above functions may be assigned to and completed by different functional modules according to actual needs. That is, a content structure of the apparatus is divided into different functional modules to complete all or part of the functions described above.

Regarding the apparatus in the above-mentioned embodiments, a specific manner in which each module performs operations has been described in detail in the method embodiments, and will not be described in detail here.

Referring to FIG. 8, it shows a schematic structural diagram of a second device 80 provided by an embodiment of the present disclosure, and the second device may be, for example, configured to perform the above method for determining the active time at the second device side. Specifically, the second device 80 may include a processor 81, and a transceiver 82 connected to the processor 81.

The processor 81 includes one or more processing cores, and the processor 81 performs various functional applications and information processing by running software programs and modules.

The transceiver 82 includes a receiver and a transmitter. Optionally, the transceiver 82 is a communication chip.

In an example, the second device 80 further includes a memory and a bus. The memory is connected to the processor through a bus. The memory may be configured to store a computer program, and the processor is configured to execute the computer program to implement various steps performed by the second device in the above method embodiments.

In addition, the memory may be implemented by any type of volatile or non-volatile storage device or a combination thereof. The volatile or non-volatile storage device includes but is not limited to: a Random-Access Memory (RAM), a Read-Only Memory (ROM), an Erasable Programmable Read-Only Memory (EPROM), an Electrically Erasable Programmable Read-Only Memory (EEPROM), a flash memory or other solid state storage technologies, a Compact Disc Read-Only Memory (CD-ROM), a Digital Video Disc (DVD) or other optical storage, a cassette, a magnetic tape, a magnetic disk storage, or other magnetic storage devices.

The transceiver 82 is configured to receive first indication information from a first device, and the first indication information is used for indicating a transmission resource reservation period reserved by the first device for a periodic transmission.

The processor 81 is configured to determine an active time of a DRX active state for the periodic transmission based on active configuration information and the first indication information. The active configuration information is used for indicating an active duration of the DRX active state for the periodic transmission, and the periodic transmission is received by the second device when the second device is in the DRX active state.

In an example, the active configuration information includes a running duration of a first timer, and the first timer is configured to control the second device to be in the DRX active state.

In an example, the active configuration information includes a first active duration, and the first active duration is used for indicating the second device being in the DRX active state.

In an example, the active configuration information is preconfigured in the second device; or the active configuration information is from a network device; or the active configuration information is from the first device.

In an example, the processor 81 is configured to: determine the active time of the DRX active state for the periodic transmission, based on the active configuration information, the transmission resource reservation period indicated by the first indication information, and a time domain transmission position of the first indication information.

In an example, the active time of the DRX active state for the periodic transmission includes a plurality of active time periods, and the processor 81 is configured to: determine a time domain position of a reserved transmission resource reserved by the first device for the periodic transmission based on the transmission resource reservation period and the time domain transmission position; and determine an active time period based on the active configuration information and the time domain position of the reserved transmission resource, where an active duration of the active time period is equal to the active duration indicated by the active configuration information.

In an example, a starting time of the active time period is earlier than or equal to a starting time of the time domain position of the reserved transmission resource; and an ending time of the active time period is equal to or later than an ending time of the time domain position of the reserved transmission resource.

In an example, the processor 81 is configured to: in a case that the transmission resource reservation period indicated by the first indication information is not zero, determine the active time of the DRX active state for the periodic transmission based on the active configuration information and the first indication information.

In an example, in a case that resource reselection is performed by the first device for the periodic transmission, a time domain position of a reselected transmission resource is located within the active time of the DRX active state for the periodic transmission.

In an example, the transceiver 82 is further configured to receive the periodic transmission within the active time of the DRX active state for the periodic transmission, and the second device is in the DRX active state during the active time of the DRX active state.

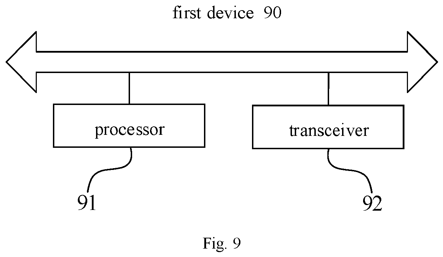

Referring to FIG. 9, it shows a schematic structural diagram of a first device 90 provided by an embodiment of the present disclosure. The first device may be, for example, configured to perform the above method for determining the active time at the first device side. Specifically, the first device 90 may include a processor 91, and a transceiver 92 connected to the processor 91.

The processor 91 includes one or more processing cores, and the processor 91 performs various functional applications and information processing by running software programs and modules.

The transceiver 92 includes a receiver and a transmitter. Optionally, the transceiver 82 is a communication chip.

In an example, the second device 80 further includes a memory and a bus. The memory is connected to the processor through a bus. The memory may be configured to store a computer program, and the processor is configured to execute the computer program to implement various steps performed by the first device in the above method embodiments.

In addition, the memory may be implemented by any type of volatile or non-volatile storage device or a combination thereof. The volatile or non-volatile storage device includes but is not limited to: a Random-Access Memory (RAM), a Read-Only Memory (ROM), an Erasable Programmable Read-Only Memory (EPROM), an Electrically Erasable Programmable Read-Only Memory (EEPROM), a flash memory or other solid state storage technologies, a Compact Disc Read-Only Memory (CD-ROM), a Digital Video Disc (DVD) or other optical storage, a cassette, a magnetic tape, a magnetic disk storage, or other magnetic storage devices.

The transceiver 92 is configured to send first indication information to a second device, and the first indication information is used for indicating a transmission resource reservation period reserved by the first device for a periodic transmission.

The transceiver 92 is further configured to send active configuration information to the second device. The active configuration information is used for indicating an active duration of a DRX active state for the periodic transmission, and the periodic transmission is received by the second device when the second device is in the DRX active state.

In an example, the active configuration information includes a running duration of a first timer, and the first timer is configured to control the second device to be in the DRX active state.

In an example, the active configuration information includes a first active duration, and the first active duration is used for indicating the second device being in the DRX active state.

In an example, in a case that resource reselection is performed by the first device for the periodic transmission, a time domain position of a reselected transmission resource is located within the active time of the DRX active state for the periodic transmission.

Embodiments of the present disclosure further provide a computer-readable storage medium having a computer program stored thereon. The computer program is configured to be executed by a processor of a second device, to implement the method for determining the active time at the second device side as described above.

Embodiments of the present disclosure further provide a computer-readable storage medium having a computer program stored thereon. The computer program is configured to be executed by a processor of a first device, to implement the method for determining the active time at the first device side as described above.

Embodiments of the present disclosure further provide a chip, including a programmable logic circuit and/or program instructions. The chip is configured to implement the method for determining the active time at the second device side as described above when running on the second device.

Embodiments of the present disclosure further provide a chip, including a programmable logic circuit and/or program instructions. The chip is configured to implement the method for determining the active time at the first device side as described above when running on the first device.

Embodiments of the present disclosure further provide a computer program product, configured to implement the method for determining the active time at the second device side as described above when running on the second device.

Embodiments of the present disclosure further provide a computer program product, configured to implement the method for determining the active time at the first device side as described above when running on the first device.

A person skilled in the art should recognize that in the foregoing one or more examples, functions described in the present disclosure may be implemented by hardware, software, firmware, or any combination thereof. When implemented by software, the foregoing functions may be stored in a computer readable medium or transmitted as one or more instructions or codes in the computer readable medium. The computer-readable medium includes a computer storage medium and a communication medium. The communication medium includes any medium that facilitates a computer program to be transmitted from one place to another. The storage medium may be any available medium accessible to a general-purpose or special-purpose computer.

Those described above are merely exemplary embodiments of the present disclosure, but are not intended to limit the present disclosure. Any modification, equivalent replacement, or improvement made within the spirit and principle of the present disclosure shall fall within the protection scope of the present disclosure.

## Claims

1. A method for determining an active time, applied to a second device, and comprising:
receiving first indication information from a first device, wherein the first indication information is used for indicating a transmission resource reservation period reserved by the first device for a periodic transmission; and
determining an active time of a Discontinuous Reception (DRX) active state for the periodic transmission based on active configuration information and the first indication information, wherein the active configuration information is used for indicating an active duration of the DRX active state for the periodic transmission, and the periodic transmission is received by the second device when the second device is in the DRX active state.

2. The method according to claim 1, wherein the active configuration information comprises a running duration of a first timer, and the first timer is configured to control the second device to be in the DRX active state.

3. The method according to claim 1, wherein the active configuration information comprises a first active duration, and the first active duration is used for indicating the second device being in the DRX active state.

4. The method according to any one of claims 1 to 3, wherein
the active configuration information is preconfigured in the second device; or
the active configuration information is from a network device; or
the active configuration information is from the first device.

5. The method according to any one of claims 1 to 4, wherein the determining the active time of the DRX active state for the periodic transmission based on the active configuration information and the first indication information comprises:
determining the active time of the DRX active state for the periodic transmission based on the active configuration information, the transmission resource reservation period indicated by the first indication information, and a time domain transmission position of the first indication information.

6. The method according to claim 5, wherein
the active time of the DRX active state for the periodic transmission comprises a plurality of active time periods; and
the determining the active time of the DRX active state for the periodic transmission based on the active configuration information, the transmission resource reservation period indicated by the first indication information, and the time domain transmission position of the first indication information comprises:
determining a time domain position of a reserved transmission resource reserved by the first device for the periodic transmission based on the transmission resource reservation period and the time domain transmission position; and
determining an active time period based on the active configuration information and the time domain position of the reserved transmission resource, wherein an active duration of the active time period is equal to the active duration indicated by the active configuration information.

7. The method according to claim 6, wherein
a starting time of the active time period is earlier than or equal to a starting time of the time domain position of the reserved transmission resource; and
an ending time of the active time period is equal to or later than an ending time of the time domain position of the reserved transmission resource.

8. The method according to any one of claims 1 to 7, wherein the determining the active time of the DRX active state for the periodic transmission based on the active configuration information and the first indication information comprises:
in a case that the transmission resource reservation period indicated by the first indication information is not zero, determining the active time of the DRX active state for the periodic transmission based on the active configuration information and the first indication information.

9. The method according to any one of claims 1 to 8, wherein, in a case that resource reselection is performed by the first device for the periodic transmission, a time domain position of a reselected transmission resource is located within the active time of the DRX active state for the periodic transmission.

10. The method according to any one of claims 1 to 9, wherein, after determining the active time of the DRX active state for the periodic transmission based on the active configuration information and the first indication information, the method further comprises:
receiving the periodic transmission within the active time of the DRX active state for the periodic transmission, wherein the second device is in the DRX active state during the active time of the DRX active state.

11. A method for determining an active time, applied to a first device, and comprising:
sending first indication information to a second device, wherein the first indication information is used for indicating a transmission resource reservation period reserved by the first device for a periodic transmission; and
sending active configuration information to the second device, wherein the active configuration information is used for indicating an active duration of a Discontinuous Reception (DRX) active state for the periodic transmission, and the periodic transmission is received by the second device when the second device is in the DRX active state.

12. The method according to claim 11, wherein the active configuration information comprises a running duration of a first timer, and the first timer is configured to control the second device to be in the DRX active state.

13. The method according to claim 11, wherein the active configuration information comprises a first active duration, and the first active duration is used for indicating the second device being in the DRX active state.

14. The method according to any one of claims 11 to 13, wherein, in a case that resource reselection is performed by the first device for the periodic transmission, a time domain position of a reselected transmission resource is located within the active time of the DRX active state for the periodic transmission.

15. An apparatus for determining an active time, provided in a second device, and comprising:
an indication information receiving module, configured to receive first indication information from a first device, wherein the first indication information is used for indicating a transmission resource reservation period reserved by the first device for a periodic transmission; and
an active time determination module, configured to determine an active time of a Discontinuous Reception (DRX) active state for the periodic transmission based on active configuration information and the first indication information, wherein the active configuration information is used for indicating an active duration of the DRX active state for the periodic transmission, and the periodic transmission is received by the second device when the second device is in the DRX active state.

16. The apparatus according to claim 15, wherein the active configuration information comprises a running duration of a first timer, and the first timer is configured to control the second device to be in the DRX active state.

17. The apparatus according to claim 15, wherein the active configuration information comprises a first active duration, and the first active duration is used for indicating the second device being in the DRX active state.

18. The apparatus according to any one of claims 15 to 17, wherein
the active configuration information is preconfigured in the second device; or
the active configuration information is from a network device; or
the active configuration information is from the first device.

19. The apparatus according to any one of claims 15 to 18, wherein the active time determination module is configured to:
determine the active time of the DRX active state for the periodic transmission based on the active configuration information, the transmission resource reservation period indicated by the first indication information, and a time domain transmission position of the first indication information.

20. The apparatus according to claim 19, wherein
the active time of the DRX active state for the periodic transmission comprises a plurality of active time periods, and
the active time determination module is configured to:
determine a time domain position of a reserved transmission resource reserved by the first device for the periodic transmission based on the transmission resource reservation period and the time domain transmission position; and
determine an active time period based on the active configuration information and the time domain position of the reserved transmission resource, wherein an active duration of the active time period is equal to the active duration indicated by the active configuration information.

21. The apparatus according to claim 20, wherein
a starting time of the active time period is earlier than or equal to a starting time of the time domain position of the reserved transmission resource; and
an ending time of the active time period is equal to or later than an ending time of the time domain position of the reserved transmission resource.

22. The apparatus according to any one of claims 15 to 21, wherein the active time determination module is configured to:
in a case that the transmission resource reservation period indicated by the first indication information is not zero, determine the active time of the DRX active state for the periodic transmission based on the active configuration information and the first indication information.

23. The apparatus according to any one of claims 15 to 22, wherein, in a case that resource reselection is performed by the first device for the periodic transmission, a time domain position of a reselected transmission resource is located within the active time of the DRX active state for the periodic transmission.

24. The apparatus according to any one of claims 15 to 23, further comprising:
a periodic transmission receiving module, configured to receive the periodic transmission within the active time of the DRX active state for the periodic transmission, wherein the second device is in the DRX active state during the active time of the DRX active state.

25. An apparatus for determining an active time, provided in a first device, and comprising:
an indication information sending module, configured to send first indication information to a second device, wherein the first indication information is used for indicating a transmission resource reservation period reserved by the first device for a periodic transmission; and
a configuration information sending module, configured to send active configuration information to the second device, wherein the active configuration information is used for indicating an active duration of a Discontinuous Reception (DRX) active state for the periodic transmission, and the periodic transmission is received by the second device when the second device is in the DRX active state.

26. The apparatus according to claim 25, wherein the active configuration information comprises a running duration of a first timer, and the first timer is configured to control the second device to be in the DRX active state.

27. The apparatus according to claim 25, wherein the active configuration information comprises a first active duration, and the first active duration is used for indicating the second device being in the DRX active state.

28. The apparatus according to any one of claims 25 to 27, wherein, in a case that resource reselection is performed by the first device for the periodic transmission, a time domain position of a reselected transmission resource is located within the active time of the DRX active state for the periodic transmission.

29. A second device, comprising: a processor, and a transceiver connected to the processor; wherein
the transceiver is configured to receive first indication information from a first device, wherein the first indication information is used for indicating a transmission resource reservation period reserved by the first device for a periodic transmission; and
the processor is configured to determine an active time of a Discontinuous Reception (DRX) active state for the periodic transmission based on active configuration information and the first indication information, wherein the active configuration information is used for indicating an active duration of the DRX active state for the periodic transmission, and the periodic transmission is received by the second device when the second device is in the DRX active state.

30. A first device, comprising: a processor, and a transceiver connected to the processor; wherein
the transceiver is configured to send first indication information to a second device, wherein the first indication information is used for indicating a transmission resource reservation period reserved by the first device for a periodic transmission; and
the transceiver is further configured to send active configuration information to the second device, wherein the active configuration information is used for indicating an active duration of a Discontinuous Reception (DRX) active state for the periodic transmission, and the periodic transmission is received by the second device when the second device is in the DRX active state.

31. A computer-readable storage medium having a computer program stored thereon, wherein the computer program is configured to be executed by a processor of a terminal device, to implement the method for determining the active time according to any one of claims 1 to 10.

32. A computer-readable storage medium having a computer program stored thereon, wherein the computer program is configured to be executed by a processor of a terminal device, to implement the method for determining the active time according to any one of claims 11 to 14.
